# EUROPÄISCHE PATENTANMELDUNG

(11) **EP 0 938 240 A2**
(43) Veröffentlichungstag der Anmeldung: **25.08.1999**
(21) Anmeldenummer: 99440023.2
(22) Anmeldetag: 05.02.1999
(51) Int. Cl.: H04Q 7/24

(54) **Aufbau einer Verbindung in sich überlagernden digitalen Funknetzen**

(30) Priorität: 18.02.1998 DE 19806616
(71) Anmelder: ALCATEL, 75008 Paris (FR)
(72) Erfinder: Sperber, Christoph, 75175 Pforzheim (DE); Barth, Ulrich, 70825 Münchingen (DE); Kühn Edgar, Dr., 70563 Stuttgart (DE)
(74) Vertreter: Brose, Gerhard, Dipl.-Ing.

(57) **Zusammenfassung**

Bei einem Verfahren zum Aufbau einer Telekommunikationsverbindung mittels Burstsignalen in einem digitalen Funknetz, das von mindestens einem anderen digitalen Funknetz überlagert ist, unterscheiden sich die Burstsignale der beiden digitalen Funknetze bei gleicher Burststruktur jeweils in einer speziellen Bitfolge (Trainingssequenz) und wird diese Trainingssequenz eines Burstsignals beim Aufbau der Telekommunikationsverbindung geprüft. Indem beim Aufbau einer Telekommunikationsverbindung nur Burstsignale mit der oder den Trainingssequenzen des gewünschten digitalen Funknetzes weiterverarbeitet werden, werden fehlempfangene andere Burstsignale ausgefiltert und verworfen.

## Beschreibung

Die Erfindung betrifft ein Verfahren zum Aufbau einer Telekommunikationsverbindung mittels Burstsignalen in einem digitalen Funknetz, das von mindestens einem anderen digitalen Funknetz überlagert ist, sowie eine Telekommunikationseinheit zum Aufbau einer Telekommunikationsverbindung in einem digitalen Funknetz, das von mindestens einem anderen digitalen Funknetz überlagert ist, mittels Burstsignalen.

Ein bekanntes digitales Funknetz ist in dem Buch "The GSM System for Mobile Communications" beschrieben, das von den Autoren M. Mouly und M.-B. Pautet 1992 im Eigenverlag mit Sitz in Palaiseau, Frankreich herausgegeben worden ist. Das in dem Buch beschriebene digitale Funknetz ist das öffentliche Mobilfunksystem "Global System for Mobile Communications" (GSM), dessen technische Komponenten den gleichnamigen Standard "GSM" erfüllen.

In diesem Buch ist auf den Seiten 232-237 und insbesondere in den Unterkapiteln 4.3.1.1. und 4.3.1.3. beschrieben, daß bei der Übertragung von Funksignalen bei GSM z.B. zur Synchronisation Trainingssequenzen verwendet werden. Bei GSM werden eine einige Trainingssequenz innerhalb eines sog. Synchronization Bursts und acht unterschiedliche Trainingssequenzen innerhalb von sog. Normal Bursts verwendet, wobei die Indizes der acht Trainingssequenzen der Normal Bursts codiert im Synchronization Burst übertragen werden. Anhand ihrer Trainingssequenzen lassen sich interferierende ähnliche GSM-Burstsignale, die einen Empfänger fast gleichzeitig erreichen, unterscheiden. Trainingssequenzen sind als spezielle Bitfolgen in der Mitte der Bitstruktur eines Burstsignals vorgesehen, um einen möglichst geringen Abstand zu den jeweils am Anfang und am Ende der Bitstruktur befindlichen eigentlichen Informationsbits zu erreichen.

Im Bereich zweier sich überlagernder digitaler Funknetze besteht die Gefahr, daß beide digitale Funknetze gleiche Trainingssequenzen verwendet. Dann können z.B. mobile Stationen (MS = Mobile Station) mit beiden digitalen Funknetzen Burstsignale wechselseitig austauschen und decodieren, was zu gegenseitigen Störungen führt. Dies ist bei mobilen Stationen insbesondere während ihrer Synchronisationsphase, aber auch in ihrem Ruhezustand (Idle State) bzw. während der Zeitdauer eines zugewiesenen Funkkanals (TCH = Traffic CHannel) möglich. Solche Störungen sind gerade zwischen einem öffentlichen mobilen Landfunknetz (PLMN = Public Land Mobile Network) und einem örtlich begrenzten schnurlosen Telekommunikationsnetz (CTS = Cordless Telephone System) denkbar, da insbesondere bei einem CTS eine Frequenzplanung zur Vermeidung von Störungen nicht durchgeführt werden kann.

Der vorliegenden Erfindung liegt daher die Aufgabe zugrunde, ein Verfahren und eine Telekommunikationseinheit der jeweils eingangs genannten Art dahingehend weiterzubilden, daß fehlempfangene Burstsignale möglichst frühzeitig erkannt und verworfen werden können.

Diese Aufgabe wird erfindungsgemäß dadurch gelöst, daß sich die Burstsignale der beiden digitalen Funknetze bei gleicher Burststruktur jeweils in einer speziellen Bitfolge (Trainingssequenz) unterscheiden und daß diese Trainingssequenz eines Burstsignals beim Aufbau der Telekommunikationsverbindung geprüft wird.

Mit Hilfe der Trainingssequenzen, die bisher lediglich zum Einstellen eines zeitlichen Nullpunktes und zum Steigen der Übertragungsempfindlichkeit genutzt werden, lassen sich erfindungsgemäß verschiedene digitale Funknetze unterscheiden. Indem beim Aufbau einer Telekommunikationsverbindung nur Burstsignale mit der oder den Trainingssequenzen des gewünschten digitalen Funknetzes weiterverarbeitet werden, werden fehlempfangene andere Burstsignale ausgefiltert und verworfen. Solche fehlempfangene Burstsignale werden nach ihrer Decodierung unmittelbar als solche erkannt und können sofort verworfen werden. Durch Einsetzen eines sog. Interleaving-Verfahrens ist es möglich, daß über die übrigen empfangenen Burstsignale die Nutzinformation wieder zurückgewonnen werden kann.

Erfindungsgemäß können Burstsignale, die von einem digitalen Netz wie z.B. PLMN, GSM oder CTS empfangen werden, bereits auf der Luftschnittstelle unterschieden werden. Eine Frequenzplanung zwischen den beiden sich überlagernden digitalen Funknetzen ist aufgrund ihrer unterschiedlichen Trainingssequenzen daher nicht erforderlich.

Das vorgeschlagene Verfahren ermöglicht so die schnelle Handhabung von Burstsignalen verschiedener digitaler Netze. Dies führt zu kurzen Handover-Zeiten, z.B. im Falle von mehr als einem CTS. Außerdem lassen sich Störungen (Interferenzen) bei Fehl-Registrierungen bereits in der Synchronisationsphase reduzieren. Insbesondere beim Handover und Roaming werden solche Fehlregistrierungen sofort erkannt und können unmittelbar abgebrochen werden.

Bei bevorzugten Ausgestaltungen des erfindungsgemäßen Verfahrens sind die Trainingssequenzen in den der Synchronisation dienenden Burstsignalen (Synchronization Bursts) und in anderen Burstsignalen (Normal Bursts) jeweils für jedes digitale Funknetz unterschiedlich. Bei GSM besteht die Trainingssequenz eines Synchronization Bursts aus 64 Bits (extended training sequence), jeweils umgeben von Informationspaketen aus je 39 Bits, und die Trainingssequenz eines Normal Bursts aus 26 Bits, umgeben von Informationspaketen aus je 58 Bits. Für ein bzw. jedes CTS sind diese GSM-spezifischen Bitsequenzen derart zu einer CTS-spezifischen Bitsequenz modifiziert, daß diese zu den GSM-spezifischen Bitfolgen möglichst nicht korreliert sind. Eine mobile Station z.B. des CTS kann die GSM- und CTS-Trainingssequenzen decodieren, unterscheiden und nur die gewünschten Burstsignale herausfiltern.

Um die Demodulation der Burstsignale zu erleichtern, weisen die Trainingssequenzen beste Autokorrelationseigenschaften sowie vorzugsweise geringste Korrelationseigenschaften untereinander auf, d.h. die Trainingssequenz bzw. Trainingssequenzen des einen digitalen Funknetzes und die Trainingssequenz bzw. Trainingssequenzen des anderen digitalen Funknetzes sind zueinander jeweils minimal kreuzkorreliert.

In einer weiteren bevorzugten Ausgestaltung sind die Trainingssequenz bzw. Trainingssequenzen für verschiedene Netzbetreiber (Operator) des gleichen digitalen Funknetzes jeweils unterschiedlich, so daß in sehr kurzen Zeiten Burstsignale verschiedener Netzbetreiber erkannt und verworfen werden können.

Besonders bevorzugt ist mindestens eines der digitalen Funknetze ein öffentliches mobiles Landfunknetz (PLMN), z.B. GSM, und mindestens eines ein örtlich begrenztes schnurloses Telekommunikationsnetz (CTS). Dann kann frühzeitig erkannt werden, wenn sich eine mobile Station im CTS-Betrieb fälschlicherweise in ein PLMN oder in ein fremdes CTS einzuregistrieren versucht. Im Handover-Fall wird der neue Verbindungsaufbau zeitlich kurz gehalten und ist somit zuverlässiger, insbesondere im Fall eines CTS-Verbundes von mehr als zwei CTS-Zellen. Verschiedenen PLMN-Betreibern in einem Land, die auch den CTS-Betrieb kontrollieren, werden unterschiedliche Trainingssequenzen für die dem Aufbau einer Telekommunikationsverbindung dienenden Burstsignale zugeteilt. Auch ist es in Bereichen von Ländergrenzen, in denen sich PLMNs verschiedener Länder überlagern, möglich, die einzelnen PLMNs anhand ihrer jeweils unterschiedlichen Trainingssequenzen zu unterscheiden.

Die oben genannte Aufgabe wird bei einer Telekommunikationseinheit der eingangs genannten Art gelöst durch ein elektronisches Filter (Equalizer), welches die in den Burstsignalen enthaltenen, für jedes digitale Funknetz unterschiedlichen speziellen Bitfolgen (Trainingssequenz) decodiert und auf diese spezielle Trainingssequenz bzw. -sequenzen überprüft. Fehlempfangene Burstsignale mit anderen Trainingssequenzen werden nicht weiterverarbeitet und somit verworfen.

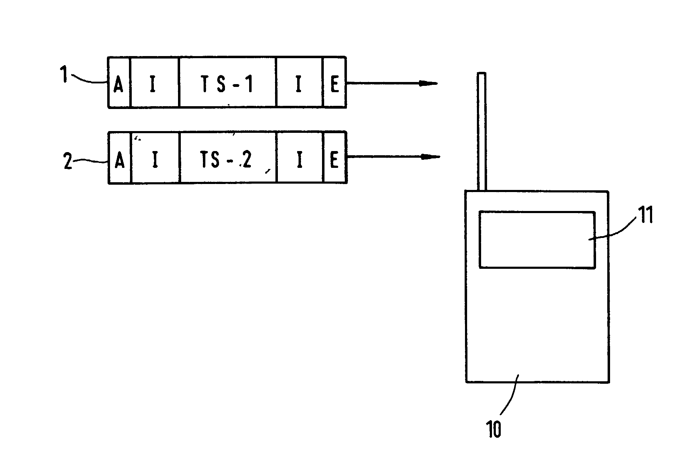

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Die einzige Figur zeigt stark schematisch als Telekommunikationseinheit eine mobile Station 10, mit der dem Verbindungsaufbau in einem digitalen Funknetz dienende Burstsignale 1, 2 empfangen werden können. Die beiden Burstsignale 1, 2, die von zwei unterschiedlichen digitalen Funknetzen stammen, überlagern sich am Ort der mobilen Station 10.

Die beiden Burstsignale 1, 2 weisen eine identische Burststruktur auf, nämlich Anfangs- und End-Bitfolgen A bzw. E, zwei Informations-Bitfolgen I und eine mittlere Bitfolge (Trainingssequenz) TS, wobei die Anzahl der jeweils eine Bitfolge bildenden Bits für beide Burstsignale 1, 2 gleich ist. Die Trainingssequenzen TS-1, TS-2 der beiden Burstsignale 1, 2 sind für das jeweilige digitale Funknetz spezifisch und derart unterschiedlich gewählt, daß die Trainingssequenzen TS-1, TS-2 beste Autokorrelationseigenschaften und untereinander nicht korreliert sind.

Empfängt die mobile Station 10 ein Burstsignal 1, 2, so wird dessen Trainingssequenz TS-1, TS-2 in einem elektronischen Filter (Equalizer) 11 decodiert und auf Übereinstimmung mit der Trainingssequenz des gewünschten digitalen Funknetzes überprüft. Nur bei Übereinstimmung seiner Trainingssequenz wird das empfangene Burstsignal 1, 2 in der mobilen Station 10 weiterverarbeitet. Fehlempfangene Burstsignale mit anderen Trainingssequenzen werden hingegen nicht weiterverarbeitet und somit verworfen.

## Patentansprüche

1. Verfahren zum Aufbau einer Telekommunikationsverbindung mittels Burstsignalen in einem digitalen Funknetz, das von mindestens einem anderen digitalen Funknetz überlagert ist,
**dadurch gekennzeichnet**,
daß sich die Burstsignale der beiden digitalen Funknetze bei gleicher Burststruktur jeweils in einer speziellen Bitfolge (Trainingssequenz) unterscheiden und daß diese Trainingssequenz eines Burstsignals beim Aufbau der Telekommünikationsverbindung geprüft wird.

2. Verfahren nach Anspruch 1, dadurch gekennzeichnet, daß die Trainingssequenzen in den der Synchronisation dienenden Burstsignalen (Synchronization Bursts) und in anderen Burstsignalen (Normal Bursts) jeweils für jedes digitale Funknetz unterschiedlich sind.

3. Verfahren nach Anspruch 1 oder 2, dadurch gekennzeichnet, daß die Trainingssequenz bzw. Trainingssequenzen des einen digitalen Funknetzes und die Trainingssequenz bzw. Trainingssequenzen des anderen digitalen Funknetzes zueinander jeweils minimal kreuzkorreliert sind.

4. Verfahren nach einem der vorhergehenden Ansprüche, dadurch gekennzeichnet, daß die Trainingssequenz bzw. Trainingssequenzen für verschiedene Netzbetreiber des gleichen digitalen Funknetzes jeweils unterschiedlich sind.

5. Verfahren nach einem der vorhergehenden Ansprüche, dadurch gekennzeichnet, daß mindestens eines der digitalen Funknetze ein öffentliches mobiles Landfunknetz (PLMN = Public Land Mobile Network) ist.

6. Verfahren nach einem der vorhergehenden Ansprüche, durch gekennzeichnet, daß mindestens eines der digitalen Funknetze ein örtlich begrenztes schnurloses Telekommunikationsnetz (CTS = Cordless Telephone System) ist.

7. Telekommunikationseinheit
zur Durchführung des Verfahrens nach einem der vorhergehenden Ansprüche,
**gekennzeichnet** durch ein elektronisches Filter, welches die in den Burstsignalen enthaltenen, für jedes digitale Funknetz unterschiedlichen speziellen Bitfolgen (Trainingssequenz) prüft.
